Europäisches Patentamt

European Patent Office

Office européen des brevets

(19)

(11) Veröffentlichungsnummer: **0 275 342**
**B1**

(12)

# EUROPÄISCHE PATENTSCHRIFT

(45) Veröffentlichungstag der Patentschrift:
10.05.89

(51) Int. Cl.⁴: **G01B 7/26, A01B 63/111**

(21) Anmeldenummer: **87100880.1**

(22) Anmeldetag: **22.01.87**

(54) **Vorrichtung zur Messung der Eindringtiefe bzw. des Höhenabstandes eines landwirtschaftlichen Arbeitsgerätes.**

(43) Veröffentlichungstag der Anmeldung:
**27.07.88 Patentblatt 88/30**

(45) Bekanntmachung des Hinweises auf die Patenterteilung:
**10.05.89 Patentblatt 89/19**

(84) Benannte Vertragsstaaten:
**DE FR GB NL**

(56) Entgegenhaltungen:
**EP-A- 0 022 471**
**EP-A- 0 057 571**
**EP-A- 0 181 425**
**FR-A- 2 312 186**
**US-A- 4 064 945**

(73) Patentinhaber: **Kirchberger, Franz, Lichtenfelser
Strasse 43, D-8623 Staffelstein(DE)**

(72) Erfinder: **Kirchberger, Franz, Lichtenfelser Strasse 43,
D-8623 Staffelstein(DE)**

(74) Vertreter: **LOUIS, PÖHLAU, LOHRENTZ & SEGETH,
Kesslerplatz 1 Postfach 3055, D-8500 Nürnberg(DE)**

## Beschreibung

Die Erfindung betrifft eine Vorrichtung zur Messung der Eindringtiefe eines landwirtschaftlichen Arbeitsgerätes in den Boden bzw. zur Messung des Höhenabstandes des Arbeitsgerätes vom Boden.

Eine Vorrichtung zur Messung der Eindringtiefe von landwirtschaftlichen Bodenbearbeitungsgeräten wie z.B. Pflugschar, Säschar oder Grubber ist aus der ET-OS 181 425 des Anmelders bekannt. Dort ist eine erste Antenne für ein Nachziehen auf dem Grund der vom Bodenbearbeitungsgerät erzeugten Furche und eine zweite Antenne für ein Nachziehen auf der nicht aufgegrabenen Bodenoberfläche sowie eine Einrichtung zur Messung des Abstandes der beiden Antennen mit Hilfe von zwischen den beiden Antennen ausgetauschter elektromagnetischer Signale vorgesehen. Bei dieser Vorrichtung wird zwischen den beiden Antennen ein elektromagnetisches Feld aufgebaut, das jedoch nicht nur von der Eindringtiefe des Bodenbearbeitungsgerätes abhängig ist, sondern auch vom chemisch-physikalischen Zustand des Bodens, weil ein Teil des elektromagnetischen Feldes durch den Boden hindurch verläuft. Durch diesen Einfluss des Bodens ist ein nicht zu vernachlässigender Messfehler möglich.

Deshalb liegt der Erfindung die Aufgabe zugrunde, eine Vorrichtung der eingangs genannten Art zu schaffen, mit der eine von den Bodeneigenschaften unabhängige genaue Messung der Eindringtiefe des Arbeitsgeräts in den Boden bzw. eine genaue Messung des Höhenabstandes des Arbeitsgerätes vom Boden möglich ist.

Diese Aufgabe wird erfindungsgemäss dadurch gelöst, dass eine elastisch nachgiebige Spule vorgesehen ist, deren Spulenquerschnitt in Abhängigkeit von der Eindringtiefe bzw. in Abhängigkeit vom Höhenabstand veränderlich ist, und dass die Spule mit einem Messgerät zur Messung der Induktivität verbunden ist. Die Spule liegt mit einem Teilabschnitt am Grund der vom landwirtschaftlichen Arbeitsgerät gezogenen Furche an, während ein zweiter Spulenabschnitt mit Hilfe einer auf dem neben der Furche befindlichen Boden aufliegenden Einrichtung mit den Oberkanten der Furche fluchtet. Das bedeutet, dass die elastisch nachgiebige Spule eine der Eindringtiefe des landwirtschaftlichen Arbeitsgerätes entsprechende lineare Ausdehnung aufweist. Diese lineare Ausdehnung der Spule ist zum Spulenquerschnitt proportional. Da die Induktivität einer Spule zum Spulenquerschnitt direkt proportional ist, ist es durch Messung der von der Eindringtiefe des landwirtschaftlichen Arbeitsgeräts abhängigen Spuleninduktivität möglich, auf die Eindringtiefe des Arbeitsgerätes rückzuschliessen. Die gleichen Überlegungen gelten auch bei Verwendung der Vorrichtung zur Messung des Höhenabstandes des Arbeitsgerätes vom Boden. Dabei liegt die elastisch nachgiebige Spule mit einem Spulenabschnitt auf dem Boden, und ein zweiter Spulenabschnitt ist über eine Hilfseinrichtung mit dem Arbeitsgerät starr verbunden. Mit der Hilfseinrichtung wird die mit dem Arbeitsgerät verbundene und vorzugsweise hinter dem Arbeitsgerät nachgezogene Spule in Abhängigkeit von der Höhe des Arbeitsgerätes über dem Boden mehr oder weniger zusammengedrückt, wodurch sich der Spulenquerschnitt ändert. Die Änderung des Spulenquerschnittes ergibt auch hier eine proportionale Änderung der Induktivität der Spule, so dass die Messung der Spuleninduktivität eine genaue Bestimmung der Höhe des Arbeitsgerätes über dem Boden ermöglicht.

Die Spule kann eine Anzahl Windungen aufweisen und mit einer Umhüllung versehen sein. Da die Induktivität einer Spule zum Quadrat der Windungszahl proportional ist, kann durch Erhöhung der Anzahl Windungen der Spule die Messempfindlichkeit zur Messung der Eindringtiefe bzw. des Höhenabstandes eines landwirtschaftlichen Arbeitsgerätes verbessert werden. Die Umhüllung dient dazu, die mit dem landwirtschaftlichen Arbeitsgerät verbundene, d.h. vorzugsweise hinter dem landwirtschaftlichen Arbeitsgerät nachgezogene Spule gegen einen vorzeitigen Verschleiss zu schützen. Um die Induktivität und damit die Messempfindlichkeit weiter zu erhöhen, ist es auch möglich, in die Umhüllung, bei der es sich vorzugsweise um eine Kunststoffumhüllung handelt, Ferritpartikel einzulagern.

Die Spule der erfindungsgemässen Vorrichtung kann einen runden oder einen ovalen Querschnitt aufweisen. Bei einer anderen Ausbildung der erfindungsgemässen Vorrichtung weist die Spule einen parallelogrammförmigen Querschnitt auf, und ist die Spule im Eckenbereich des parallelogrammförmigen Querschnitts nachgiebiger als entlang der die Eckenbereiche miteinander verbindenden Spulenabschnitte. Bei einer solchen Ausbildung der elastisch nachgiebigen Spule ist der Spulenquerschnitt zur Eindringtiefe des Arbeitsgeräts in den Boden bzw. zur Höhe des Arbeitsgerätes über dem Boden direkt proportional, so dass die Induktivität der Spule von der Eindringtiefe bzw. Höhe linear abhängig ist. Eine kleinere Induktivität entspricht einer kleineren Eindringtiefe bzw. Höhe, und umgekehrt.

Eine Vorrichtung der oben beschriebenen Art zur Messung der Eindringtiefe ist dadurch gekennzeichnet, dass ein erster Spulenabschnitt der Spule zum Nachziehen auf dem Grund der vom Arbeitsgerät erzeugten Furche vorgesehen ist, und dass eine Einrichtung vorgesehen ist, welche die Furche überspannt und neben der Furche auf der nicht aufgegrabenen Bodenoberfläche aufliegt, wobei die Einrichtung an einem dem ersten Spulenabschnitt gegenüberliegenden zweiten Spulenabschnitt anliegt und mit dem Arbeitsgerät verbunden ist. Bei dieser Einrichtung, mit deren Hilfe der zweite Spulenabschnitt mit der unbearbeiteten Bodenoberfläche jederzeit fluchtet, kann es sich um eine Walze handeln, die wie die Spule mit dem Arbeitsgerät verbunden ist. Bei dieser Ausbildung ist die Einrichtung in Gestalt einer Walze mit der elastisch nachgiebigen Spule nicht verbunden, sondern sie drückt nur gegen den zweiten Abschnitt der Spule. Bei einer anderen Ausbildung der erfindungsgemässen Vorrichtung kann die Einrichtung mit dem zweiten Abschnitt der Spule verbunden sein.

Eine Vorrichtung der weiter oben beschriebenen Art zur Messung des Höhenabstandes ist dadurch gekennzeichnet, dass ein erster Spulenabschnitt der Spule zum Nachziehen auf der Bodenoberfläche vorgesehen ist, und dass eine Einrichtung vorgesehen ist, die an einem dem ersten Spulenabschnitt gegenüberliegenden zweiten Spulenabschnitt anliegt und mit dem Arbeitsgerät verbunden ist. Die mit dem Arbeitsgerät verbundene Einrichtung kann am zweiten Spulenabschnitt der elastisch nachgiebigen Spule lose anliegen, wenn die Spule selbst am Arbeitsgerät befestigt ist. Die am Arbeitsgerät befestigte Einrichtung kann jedoch auch mit dem zweiten Spulenabschnitt fest verbunden sein. Bei einer derartigen Ausbildung ist es nicht unbedingt erforderlich, die Spule ausserdem auch noch mit dem Arbeitsgerät zu verbinden.

Es hat sich als vorteilhaft erwiesen, dass das Messgerät zur Messung der Induktivität intermittierend tätig ist. Durch einen intermittierenden Betrieb ist der Energieverbrauch der erfindungsgemässen Vorrichtung auf ein Minimum reduziert.

Bei der erfindungsgemässen Vorrichtung kann das Messgerät mit einem A/D-Wandler verbunden sein, der an einen Mikroprozessor anschliessbar ist. Mit Hilfe des A/D-Wandlers werden die Analogsignale der gemessenen Induktivität in Digitalsignale umgewandelt, die in den Mikroprozessor eingegeben werden können. Der Mikroprozessor ist in der Lage, über die Eindringtiefe des landwirtschaftlichen Arbeitsgeräts bzw. über den Höhenabstand des Arbeitsgerätes vom Boden ein Protokoll aufzunehmen und zu speichern, bei dem der Messfehler minimal ist. Das auf diese Weise aufgezeichnete und gespeicherte Messprotokoll kann in einer sog. digitalen Schlagkartei abgelegt werden.

Weitere Einzelheiten, Merkmale und Vorteile ergeben sich aus der nachfolgenden Beschreibung einer in der Zeichnung schematisch dargestellten Vorrichtung zur Messung der Eindringtiefe eines landwirtschaftlichen Arbeitsgerätes in den Boden, und einer Vorrichtung zur Messung des Höhenabstandes des Arbeitsgerätes vom Boden. Es zeigt:

Figur 1 eine Seitenansicht einer Vorrichtung zur Messung der Eindringtiefe, die hinter einem abschnittweise dargestellten landwirtschaftlichen Arbeitsgerät nachgezogen wird,

Figur 2 eine Seitenansicht eines abschnittweise dargestellten landwirtschaftlichen Gerätes mit einer Vorrichtung zur Messung des Höhenabstandes des Arbeitsgerätes vom Boden, die mit dem Arbeitsgerät verbunden und hinter dem Arbeitsgerät nachgezogen wird, und

Figur 3 eine Blockdarstellung der Schaltung aus Spule, Induktionsmessgerät, A/D-Wandler und Mikroprozessor.

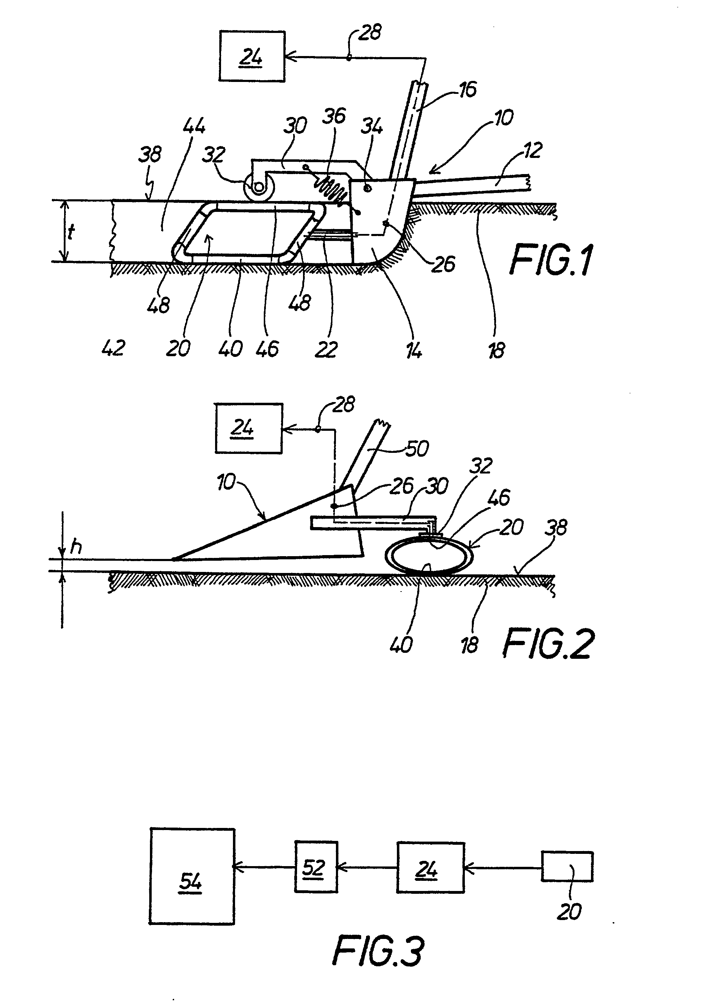

Figur 1 zeigt ein abschnittweise dargestelltes landwirtschaftliches Arbeitsgerät 10 in Gestalt einer Pflugschar, Säschar o.dgl. Mit der Bezugsziffer 12 ist ein mit der Schar 14 fest verbundener Schararm bezeichnet, der abschnittweise dargestellt ist. Mit der Bezugsziffer 16 ist ein Saatrohr bezeichnet, das in die Schar 14 einmündet. Die Schar 14 ist in den abschnittweise dargestellten Boden 18 eine bestimmte Tiefe eingedrungen dargestellt. Die Eindringtiefe ist durch den Pfeil t bezeichnet. Mit der Schaar 14 ist eine elastisch nachgiebige Spule 20 verbunden, die einen parallelogrammförmigen Querschnitt aufweist. Ein Verbindungselement 22 dient zur Verbindung der Spule 20 mit der Schar 14. Durch das Verbindungselement 22 erstrecken sich die beiden Anschlussenden der Spule 20 hindurch, die mit einem Messgerät 24 zur Messung der Induktivität der Spule 20 verbunden sind. Die elektrisch leitende Verbindung zwischen der Spule 20 und dem Induktionsmessgerät 24 ist durch die strichlierte Linie 26 und den Pfeil 28 schematisch angedeutet. Mit der Schar 14 ist mittels eines Verbindungsarms 30 eine Einrichtung 32 in Gestalt einer Walze schwenkbeweglich verbunden. Der Verbindungsarm 30 ist um die an der Schar 14 vorgesehene Achse 34 schwenkbar. Ein Federelement 36 zwischen dem Verbindungsarm 30 und der Schar 14 ist dazu vorgesehen, die Walze 32 jederzeit gegen die unbearbeitete Oberfläche 38 des Bodens 18 zu drücken.

Die elastisch nachgiebige Spule 20 weist einen ersten Spulenabschnitt 40 auf, der am Grund 42 der Furche 44 anliegt. Dem ersten Spulenabschnitt 40 der Spule 20 liegt ein zweiter Spulenabschnitt 46 gegenüber, gegen den die Walze 32 drückt. Auf diese Weise entspricht der Abstand zwischen dem ersten Spulenabschnitt 40 und dem zweiten Spulenabschnitt 46 genau der Eindringtiefe t der Schar 14. Die beiden Spulenabschnitte 40 und 46 sind miteinander durch die Spulenabschnitte 48 verbunden. Die Spule 20 ist mit einer Umhüllung umgeben, wobei die Umhüllung entlang der Spulenabschnitte 40, 46 und 48 eine grössere Steifheit aufweist, als im Übergangsbereich zwischen den Spulenabschnitten 40, 46 oder 48. Dadurch ist es möglich, den Abstand zwischen dem ersten und dem zweiten Spulenabschnitt 40 und 46 entsprechend der Eindringtiefe t mittels der Walze 32 zu verändern. Einer solchen Änderung des Abstandes zwischen den Spulenabschnitten 40 und 46 entspricht eine Änderung des Querschnittes der Spule 20. Diese Querschnittesänderung ist einer Änderung der Induktivität der Spule 20 direkt proportional. Auf diese Weise ist es mittels des Induktionsmessgerätes 24 direkt möglich, durch Messung der Induktivität der Spule 20 die Eindringtiefe t der Schar 14 in den Boden 18 zu bestimmen.

Figur 2 zeigt schematisch ein anderes landwirtschaftliches Arbeitsgerät 10 in Gestalt eines Mähwerks mit einem abschnittweise dargestellten Mäharm 50. Das Arbeitsgerät 10 weist von der Oberfläche 38 des Bodens 18 eine Höhe h auf. Zur Bestimmung dieser Höhe h dient eine Spule 20, die elastisch nachgiebig ausgebildet ist und die mit einem Spulenabschnitt 40 auf der Oberfläche 38 des Bodens 18 aufliegt. Ein dem ersten Spulenabschnitt 40 gegenüberliegender zweiter Spulenabschnitt 46 ist mit einem Endabschnitt eines Verbindungsarms 30 verbunden, der mit seinem zweiten Endabschnitt am landwirtschaftlichen Arbeitsgerät 10 befestigt ist.

Die in Figur 2 dargestellte Spule unterscheidet sich von der in Figur 1 dargestellten Spule dadurch, dass sie keinen parallelogrammförmigen Querschnitt besitzt, sondern einen ovalen Querschnitt. Die beiden Anschlussenden der elastisch nachgiebigen Spule 20 sind mit einem Induktionsmessgerät 24 verbunden. Diese Verbindung ist durch eine strichlierte Linie 26 und durch einen Pfeil 28 schematisch angedeutet.

Eine Änderung der Höhe h des landwirtschaftlichen Arbeitsgerätes 10 von der Oberfläche 38 des Bodens 18 entspricht einer Änderung des Querschnittes der Spule 20 die wiederum einer Änderung der Induktivität der Spule 20 entspricht. Diese Induktivitätsänderung wird mittels des Messgerätes 24 gemessen. Da die Höhe h und der Querschnitt der Spule 20 zueinander in einer definierten Abhängigkeit stehen, ist es durch Messung der Induktivität der Spule 20 möglich, auf die Höhe h zurückzuschliessen.

Mit der erfindungsgemässen Vorrichtung ist es also möglich, entweder die Eindringtiefe t oder die Höhe h genau zu bestimmen. Diese Bestimmung der Eindringtiefe t bzw. der Höhe h ist von den chemisch-physikalischen Eigenschaften des Bodens 18 unabhängig.

Mit der Bezugsziffer 32 ist auch in dieser Figur die Einrichtung bezeichnet, die am zweiten Spulenabschnitt 46 anliegt. Bei der in Figur 2 dargestellten Ausbildung der Vorrichtung ist die Einrichtung 32 als Lasche ausgebildet, die mit dem zweiten Spulenabschnitt 46 fest verbunden ist.

Figur 3 zeigt in einer schematischen Darstellung das Messgerät 24 zur Messung der Induktivität der Spule 20, das mit einem A/D-Wandler 52 verbunden ist. Der Ausgang des A/D-Wandlers 52 ist mit dem Eingang eines Mikroprozessors 54 verbunden. Im Mikroprozessor 54 werden die vom Induktionsmessgerät 24 abgegebenen analogen und mit Hilfe des A/D-Wandlers 52 digitalisierten Signale gespeichert. Die im Mikroprozessor 54 gespeicherten Messdaten der Eindringtiefe t bzw. der Höhe h können nach Durchführung der Arbeit in einer sog. digitalen Schlagkartei abgelegt werden.

## Patentansprüche

1. Vorrichtung zur Messung der Eindringtiefe (t) eines landwirtschaftlichen Arbeitsgerätes (10) in den Boden (18) bzw. zur Messung des Höhenabstandes (h) des Arbeitsgerätes (10) vom Boden(18), dadurch gekennzeichnet, dass eine elastisch nachgiebige Spule (20) vorgesehen ist, deren Spulenquerschnitt in Abhängigkeit von der Eindringtiefe (t) bzw. in Abhängigkeit vom Höhenabstand (h) veränderlich ist, und dass die Spule (20) mit einem Messgerät (24) zur Messung der Induktivität verbunden ist.

2. Vorrichtung nach Anspruch 1, dadurch gekennzeichnet, dass die Spule (20) eine Anzahl Windungen aufweist und mit einer Umhüllung versehen ist.

3. Vorrichtung nach Anspruch 1 oder 2, dadurch gekennzeichnet, dass die Spule (20) einen runden oder ovalen Querschnitt aufweist.

4. Vorrichtung nach Anspruch 1 oder 2, dadurch gekennzeichnet, dass die Spule (20) einen parallelogrammförmigen Querschnitt aufweist, und dass die Spule im Eckenbereich des parallelogrammförmigen Querschnitts nachgiebiger ist als entlang der die Eckenbereiche miteinander verbindenden Spulenabschnitte (40, 46, 48).

5. Vorrichtung nach einem der vorhergehenden Ansprüche zur Messung der Eindringtiefe (t), dadurch gekennzeichnet, dass ein erster Spulenabschnitt (40) der Spule (20) zum Nachziehen auf dem Grund (42) der vom Arbeitsgerät (10) erzeugten Furche (44) vorgesehen ist, und dass eine Einrichtung (30, 32) vorgesehen ist, welche die Furche (44) überspannt und neben der Furche (44) auf der nicht aufgegrabenen Bodenoberfläche (38) aufliegt, wobei die Einrichtung (30, 32) an einem dem ersten Spulenabschnitt (40) gegenüberliegenden zweiten Spulenabschnitt (46) der Spule (20) anliegt und mit dem Arbeitsgerät (10) verbunden ist.

6. Vorrichtung nach Anspruch 5, dadurch gekennzeichnet, dass die Einrichtung (30, 32) mit dem zweiten Spulenabschnitt (46) verbunden ist.

7. Vorrichtung nach einem der Ansprüche 1 bis 4 zur Messung des Höhenabstandes (h), dadurch gekennzeichnet, dass ein erster Spulenabschnitt (40) der Spule (20) zum Nachziehen auf der Bodenoberfläche (38) vorgesehen ist, und dass eine Einrichtung (30) vorgesehen ist, die an einem dem ersten Spulenabschnitt (40) gegenüberliegenden zweiten Spulenabschnitt (46) anliegt und mit dem Arbeitsgerät (10) verbunden ist.

8. Vorrichtung nach einem der vorhergehenden Ansprüche, dadurch gekennzeichnet, dass das Messgerät (24) zur Messung der Induktivität der Spule (20) intermittierend tätig ist.

9. Vorrichtung nach einem der vorhergehenden Ansprüche, dadurch gekennzeichnet, dass das Messgerät (24) mit einem A/D-Wandler verbunden ist, der an einen Mikroprozessor anschliessbar ist.

## Claims

1. A device for measuring the depth (t) to which an agricultural working implement (10) penetrates into the groud (18), or respectively for measuring the vertical distance (h) of the working implement (10) from the ground (18), characterised in that provision is made for an elastically yielding coil (20), whose coil cross section is variable in accordance with the depth of penetration (t), or respectively in accordance with the vertical distance (h), and that the coil is connected to a measuring instrument (24) for the measurement of the inductance.

2. A device according to claim 1, characterised in that the coil (20) has a number of turns and is provided with a cover.

3. A device according to claim 1 or 2, characterised in that the coil (20) has a round or oval cross section.

4. A device according to claim 1 or 2, characterised in that the coil (20) has a parallelogram-shaped cross section, and that the coil is more yielding in the corner zone of the parallelogram-shaped cross section than along the coil sections (40, 46, 48) joining the corner zones to each other.

5. A device according to one of the preceding claims for measuring the depth of penetration (t), characterised in that provision is made for a first coil section (40) of the coil (20) for being dragged along on the bottom (42) of the furrow (44) produced by the working implement (10), and that a device (30, 32) is provided spanning the furrow (44) and which lies on top of the ground surface (38) not dug up next to the furrow (44), the device (30, 32) bearing on a second coil section (46) of coil (20) lying opposite the first coil section (40) and which device is connected to the working implement (10).

6. A device according to claim 5, characterised in that the device (30, 32) is connected to the second coil section (46).

7. A device according to one of claims 1 to 4 for measuring the vertical distance (h), characterised in that provision is made for a first coil section (40) of the coil (20) for being dragged along on the ground surface (38), and that a device (30) is provided which bears on a second coil section (46) lying opposite the first coil section (40), and which device is connected to the working implement (10).

8. A device according to one of the preceding claims, characterised in that the measuring instrument (24) is intermittently active for measuring the inductance of the coil (20).

9. A device according to one of the preceding claims, characterised in that the measuring instrument (24) is connected to an A/D converter which may be connected to a microprocessor.

**Revendications**

1. Dispositif pour mesurer la profondeur de pénétration (t) d'un outillage agricole (10) dans le sol (18) ou pour mesurer la distance en hauteur (h) séparant un tel outillage (10) du sol (18), caractérisé en ce qu'il est prévu une bobine de self (20) déformable élastiquement et dont la section transversale peut varier en fonction de la profondeur de pénétration (t) ou en fonction de la hauteur (h) au-dessus du sol et en ce que cette bobine de self (20) est reliée à un appareil (24) permettant de mesurer l'inductance.

2. Dispositif suivant la revendication 1, caractérisé en ce que la bobine de self (20) comporte un certain nombre de spires et est équipée d'une enveloppe.

3. Dispositif suivant la revendication 1 ou 2, caractérisé en ce que la bobine de self (20) présente une section transversale circulaire ou ovale.

4. Dispositif suivant la revendication 1 ou 2, caractérisé en ce que la bobine de self (20) présente une section transversale en forme de parallélogramme et en ce que cette bobine est plus déformable dans la zone des angles de cette section en forme de parallélogramme que le long des tronçons de bobine (40, 46, 48) réunissant entre elles ces zones des angles.

5. Dispositif suivant l'une des revendications précédentes, destiné à mesurer la profondeur de pénétration (t), caractérisé en ce qu'un premier tronçon (40) de la bobine de self (20) est prévu pour traîner sur le fond (42) du sillon (44) produit par l'outillage (10) et en ce qu'il est prévu un mécanisme (30, 32) qui passe d'un bord à l'autre du sillon (44) et repose, sur le côté de ce sillon (44), sur la surface non creusée (38) du sol, ce mécanisme (30, 32) étant solidaire de l'outillage (10) et prenant appui sur un second tronçon (46) de la bobine (20) qui est situé à l'opposé du premier tronçon de bobine (40).

6. Dispositif suivant la revendication 5, caractérisé en ce que le mécanisme (30, 32) est solidaire du second tronçon de bobine (46).

7. Dispositif suivant l'une des revendications 1 à 4, destiné à mesurer la distance en hauteur (h), caractérisé en ce qu'un premier tronçon (40) de la bobine de self (20) est prévu pour traîner sur la surface (38) du sol et en ce qu'il est prévu un mécanisme (30) qui est solidaire de l'outillage (10) et prend appui sur un second tronçon de bobine (46) situé à l'opposé du premier tronçon de bobine (40).

8. Dispositif suivant l'une des revendications précédentes, caractérisé en ce que l'appareil de mesure (24) prévu pour mesurer l'inductance de la bobine de self (20) fonctionne de façon intermittente.

9. Dispositif suivant l'une des revendications précédentes, caractérisé en ce que l'appareil de mesure (24) est relié à un convertisseur analogique/numérique qui est raccordable à un microprocesseur.

EP 0 275 342 B1

FIG.1

FIG.2

FIG.3